# EUROPÄISCHE PATENTSCHRIFT

(11) **EP 1 763 468 B1**
(45) Veröffentlichungstag und Bekanntmachung des Hinweises auf die Patenterteilung: **18.06.2008**
(21) Anmeldenummer: 05754446.2
(22) Anmeldetag: 23.06.2005
(51) Int. Cl.: B62D 25/08

(54) **KRAFTFAHRZEUGKAROSSERIE FÜR EIN KRAFTFAHRZEUG**
CAR BODY FOR A MOTOR VEHICLE
CARROSSERIE DE VEHICULE AUTOMOBILE

(30) Priorität: 24.06.2004 DE 102004030471
(43) Veröffentlichungstag der Anmeldung: 21.03.2007
(73) Patentinhaber: GM Global Technology Operations, Inc., Detroit, MI 48265-3000 (US)
(72) Erfinder: SIEBENEICK, Jürgen, 55430 Oberwesel (DE)
(74) Vertreter: Heuer, Wilhelm
(86) Internationale Anmeldenummer: PCT/EP2005/006777
(87) Internationale Veröffentlichungsnummer: WO 2006/000406

(56) Entgegenhaltungen:
- EP-A- 0 547 346
- DE-B- 1 164 251
- US-A- 2 901 242

## Beschreibung

Die Erfindung betrifft eine Kraftfahrzeugkarosserie für ein Kraftfahrzeug mit einem Rahmenteil und einer Gasfederdämpfereinheit und mit einer von einem Kolben begrenzten Druckkammer der Gasfederdämpfereinheit.

Gasfederdämpfereinheiten sind prinzipiell bekannt, beispielsweise aus der EP 0160 277 B1. Eine Ausführungsform im sogenannten Zweikammerdesign zeichnet sich durch eine größere Bauhöhe als bei bekannten Luftfedern oder Stahlfedern, beispielsweise Miniblockfedern aus. Daher benötigt die Gasfederdämpfereinheit einen sehr großen Bauraum.

Eine Kraftfahrzeugkarosserie mit einer Gasfederdämpfereinheit nach dem Oberbegriff des Anspruchs 1 ist in US 2 901 242 A offenbart. Bei dieser Gasfederdämpfereinheit ist ein Kolben radial spielhaltig in einer Öffnung einer Druckkammer beweglich, und ein Spalt zwischen dem Kolben und dem Rand der Öffnung ist durch eine an dem Rand und dem Kolben befestigte Membran abgedichtet.

Der Erfindung liegt das Problem zugrunde, bei einer Kraftfahrzeugkarosserie der eingangs genannten Art mit einem einfachen Aufbau die Langlebigkeit der Gasfederdämpfereinheit zu verbessern.

Dieses Problem wird erfindungsgemäß dadurch gelöst, dass in der Aufnahme ein einseitig verschlossener rohrförmiger Stutzen zur Bildung der Druckkammer angeordnet ist und dass der Kolben längsverschieblich in dem rohrförmigen Stutzen geführt ist.

Durch diese Gestaltung wird die Druckkammer in dem Rahmenteil integriert. Daher benötigt die Gasfederdämpfereinheit keine aufwändige Befestigung an das Rahmenteil. Die erfindungsgemäße Kraftfahrzeugkarosserie kann daher besonders niedrig gestaltet sein, was zu einem besonders niedrigen Laderaum des Kraftfahrzeuges führt. Weiterhin führt die Integration der Druckkammer in das Rahmenteil zu einem besonders geringen Gewicht von Kraftfahrzeugkarosserie und Gasfederdämpfereinheit. Indem das Rahmenteil einen einseitig verschlossenen rohrförmigen Stutzen zur Bildung der Druckkammer aufweist und der Kolben längsverschieblich in dem rohrförmigen Stutzen geführt ist, wird die Zahl der Bauteile der Kraftfahrzeugkarosserie minimiert.

Die erfindungsgemäße Kraftfahrzeugkarosserie gestaltet sich besonders kompakt, wenn zumindest ein Teilbereich der Druckkammer innerhalb des Querschnitts eines Längsträgers der Kraftfahrzeugkarosserie angeordnet ist. Hierdurch bildet der Längsträger das Rahmenteil.

Die Fertigung der erfindungsgemäßen Kraftfahrzeugkarosserie gestaltet sich besonders einfach, wenn der Stutzen mit einem Träger des Rahmenteils verschweißt ist.

Zur weiteren Verringerung des Gewichts der erfindungsgemäßen Kraftfahrzeugkarosserie trägt es bei, wenn der Stutzen ein Aluminiumprofil ist. Vorzugsweise ist das Aluminiumprofil im Extrudierverfahren gefertigt. Eine Laufbahn des Kolbens ist vorzugsweise anodisch oberflächenveredelt.

Der Stutzen könnte beispielsweise ein Sackloch zur Aufnahme des Kolbens aufweisen. Die Gasfederdämpfereinheit lässt sich jedoch gemäß einer anderen vorteilhaften Weiterbildung der Erfindung besonders einfach fertigen, wenn der Stutzen von einem Deckel gasdicht verschlossen ist. Die gasdichte Verbindung des Deckels mit dem Stutzen erfolgt vorzugsweise stoffschlüssig durch Verschweißung oder Verklebung.

Die Gasfederdämpfereinheit ist gemäß einer anderen vorteilhaften Weiterbildung der Erfindung besonders einfach aufgebaut, wenn der Stutzen an seinem dem Deckel abgewandten Ende einen Kragen zur gasdichten Anbindung eines Gummibalgs hat. Hierdurch benötigt die erfindungsgemäße Kraftfahrzeugkarosserie besonders wenige Bauteile.

Zur Vereinfachung der Montage der Gasfederdämpfereinheit in der erfindungsgemäßen Kraftfahrzeugkarosserie trägt es bei, wenn eine mit dem Kolben verbundene Kolbenstange an seinem dem Kolben abgewandten Ende ein Lager mit einem Gummidämpfer zur Anbindung an eine Achse der Kraftfahrzeugkarosserie hat.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: schematisch einen hinteren Teilbereich eines Kraftfahrzeuges mit einer erfindungsgemäßen Kraftfahrzeugkarosserie,
- Fig. 2: eine stark vergrößerte Darstellung der Kraftfahrzeugkarosserie im Bereich einer Gasfederdämpfereinheit,
- Fig. 3: eine Schnittdarstellung durch einen Stutzen der Kraftfahrzeugkarosserie aus Figur 2 entlang der Linie III - III,

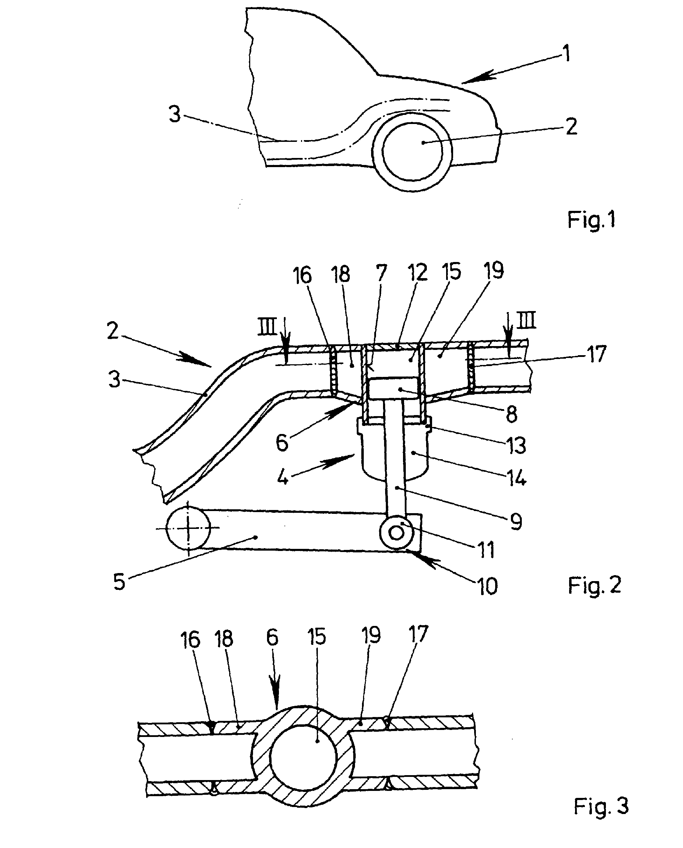

Figur 1 zeigt einen hinteren Bereich einer schematisch dargestellten Kraftfahrzeugkarosserie 1 mit einem linken hinteren Rad 2. Ein Längsträger 3 der Kraftfahrzeugkarosserie 1 ist in der Zeichnung strichpunktiert dargestellt.

Figur 2 zeigt stark vergrößert einen Teilbereich der Kraftfahrzeugkarosserie 1 aus Figur 1 im Bereich einer Gasfederdämpfereinheit 4 in einer Schnittdarstellung. Die Gasfederdämpfereinheit 4 ist an dem Längsträger 3 befestigt und an einer mit dem Rad 2 aus Figur 1 zu verbindenden Achse 5 angelenkt. Der Längsträger 3 weist einen rohrförmigen Stutzen 6 mit einer Laufbahn 7 für einen längsverschieblich in dem Stutzen 6 geführten Kolben 8 auf. Der Kolben 8 ist auf einer Kolbenstange 9 befestigt. Zur Anbindung der Kolbenstange 9 an der Achse 5 ist ein Lager 10 mit einem Gummidämpfer 11 vorgesehen. Der Stutzen 6 ist auf seinem der Achse 5 abgewandten Ende von einem Deckel 12 gasdicht verschlossen. Der Deckel 12 ist beispielsweise in dem Stutzen 6 verschweißt. An seinem der Achse 5 zugewandten Ende hat der Stutzen 6 einen Kragen 13 zur gasdichten Anbindung eines Gummibalgs 14. Der Gummibalg 14 ist zudem gasdicht mit der Kolbenstange 9 verbunden.

Zwischen dem Kolben 8 und dem Deckel 12 hat die Gasfederdämpfereinheit 4 eine Druckkammer 15. Der Deckel 12 bildet gleichzeitig einen Anschlag für die Bewegung des Kolbens 8. Die Druckkammer 15 ist vollständig innerhalb des Querschnitts des Längsträgers 3 angeordnet. Weiterhin hat der Stutzen 6 über Schweißnähte 16, 17 mit dem Längsträger 3 verbundene Flansche 18, 19. Der Stutzen 6 kann beispielsweise als extruiertes Aluminiumprofil gefertigt sein.

Figur 3 zeigt in einer Schnittdarstellung durch den Längsträger 3 aus Figur 2 entlang der Linie III - III, dass die mit dem Längsträger 3 verschweißten Flansche 18, 19 des Stutzens 6 stegartig von dem Stutzen 6 abstehen. An ihren freien Enden sind die Flansche 18, 19 mit dem Längsträger 3 verschweißt.

### Bezugszeichenliste

- 1: Kraftfahrzeugkarosserie
- 2: Rad
- 3: Längsträger
- 4: Gasfederdämpfereinheit
- 5: Achse
- 6: Stutzen
- 7: Laufbahn
- 8: Kolben
- 9: Kolbenstange
- 10: Lager
- 11: Gummidämpfer
- 12: Deckel
- 13: Kragen
- 14: Gummibalg
- 15: Druckkammer
- 16, 17: Schweißnaht
- 18, 19: Flansch

## Patentansprüche

1. Kraftfahrzeugkarosserie (1) für ein Kraftfahrzeug mit einem Rahmenteil und einer Gasfederdämpfereinheit (4) und mit einer von einem Kolben (8) begrenzten Druckkammer (15) der Gasfederdämpfereinheit (4), **dadurch gekennzeichnet, dass** das Rahmenteil einen einseitig verschlossenen rohrförmigen Stutzen (6) zur Bildung der Druckkammer (15) aufweist und dass der Kolben (8) längsverschieblich in dem rohrförmigen Stutzen (6) geführt ist.

2. Kraftfahrzeugkarosserie (1) nach Anspruch 1, **dadurch gekennzeichnet, dass** zumindest ein Teilbereich der Druckkammer (15) innerhalb des Querschnitts eines Längsträgers (3) der Kraftfahrzeugkarosserie (1) angeordnet ist.

3. Kraftfahrzeugkarosserie (1) nach zumindest einem der vorhergehenden Ansprüche, **dadurch gekennzeichnet, dass** der Stutzen (6) mit einem Träger (3) des Rahmenteils verschweißt ist.

4. Kraftfahrzeugkarosserie (1) nach zumindest einem der vorhergehenden Ansprüche, **dadurch gekennzeichnet, dass** der Stutzen (6) ein Aluminiumprofil ist.

5. Kraftfahrzeugkarosserie (1) nach zumindest einem der vorhergehenden Ansprüche, **dadurch gekennzeichnet, dass** der Stutzen (6) von einem Deckel (12) gasdicht verschlossen ist.

6. Kraftfahrzeugkarosserie (1) nach zumindest einem der vorhergehenden Ansprüche, **dadurch gekennzeichnet, dass** der Stutzen (6) an seinem dem Deckel (12) abgewandten Ende einen Kragen (13) zur gasdichten Anbindung eines Gummibalgs (14) hat.

7. Kraftfahrzeugkarosserie (1) nach zumindest einem der vorhergehenden Ansprüche, **dadurch gekennzeichnet, dass** eine mit dem Kolben (8) verbundene Kolbenstange (9) an seinem dem Kolben (8) abgewandten Ende ein Lager (10) mit einem Gummidämpfer (11) zur Anbindung an eine Achse (5) der Kraftfahrzeugkarosserie (1) hat.

## Claims

1. A car body (1) for a motor vehicle comprising a frame part and a pneumatic spring damper unit (4) and comprising a pressure chamber (15) of the pneumatic spring damper unit (4), which is confined by a piston (8), **characterized in that** the frame part encompasses a tubular pipe section (6) closed on one side for forming the pressure chamber (15) and **in that** the piston (8) is guided in the tubular pipe section (6) so as to move in longitudinal direction.

2. The car body (1) according to claim 1, **characterized in that** at least a partial region of the pressure chamber (15) is arranged within the cross section of a longitudinal chassis beam (3) of the car body (1).

3. The car body (1) according to at least one of the preceding claims, **characterized in that** the pipe section (6) is welded to a support (3) of the frame part.

4. The car body (1) according to at least one of the preceding claims, **characterized in that** the pipe section (6) is an aluminum profile.

5. The car body (1) according to at least one of the preceding claims, **characterized in that** the pipe section (6) is closed by a cover (12) in a gas-tight manner.

6. The car body (1) according to at least one of the preceding claims, **characterized in that**, the pipe section (6), at its end facing away from the cover (12), has a flange (13) for a gas-tight connection of a rubber bellow (14).

7. The car body (1) according to at least one of the preceding claims, **characterized in that** a piston rod (9) which is connected to the piston (8), has a bearing (10) comprising a rubber shock absorber (11) at its end facing away from the piston (8) for a connection to an axle (5) of the car body (1).

## Revendications

1. Carrosserie de véhicule automobile (1) pour un véhicule automobile avec une partie de châssis et un module d'amortisseur pneumatique (4) et avec une chambre de compression (15) limitée par un piston (8) du module d'amortisseur pneumatique (4), **caractérisée en ce que** la partie de châssis présente un manchon tubulaire (6) fermé d'un côté pour la formation de la chambre de compression (15) et que le piston (8) est guidé de manière coulissante longitudinalement dans le manchon tubulaire (6).

2. Carrosserie de véhicule automobile (1) selon la revendication 1, **caractérisée en ce qu'**au moins une région partielle de la chambre de compression (15) est disposée au sein de la section d'un longeron (3) de la carrosserie de véhicule automobile (1).

3. Carrosserie de véhicule automobile (1) selon au moins une des revendications précédentes, **caractérisée en ce que** le manchon (6) est soudé à un support (3) de la partie de châssis.

4. Carrosserie de véhicule automobile (1) selon au moins une des revendications précédentes, **caractérisée en ce que** le manchon (6) est un profilé en aluminium.

5. Carrosserie de véhicule automobile (1) selon au moins une des revendications précédentes, **caractérisée en ce que** le manchon (6) est fermé de manière étanche au gaz par un couvercle (12).

6. Carrosserie de véhicule automobile (1) selon au moins une des revendications précédentes, **caractérisée en ce que** le manchon (6) a au niveau de son extrémité détournée du couvercle (12) un collet (13) pour la liaison étanche au gaz d'un soufflet en caoutchouc (14).

7. Carrosserie de véhicule automobile (1) selon au moins une des revendications précédentes, **caractérisée en ce qu'**une tige de piston (9) reliée au piston (8) a au niveau de son extrémité détournée du piston (8) un palier (10) avec un amortisseur en caoutchouc (11) pour la liaison à un essieu (5) de la carrosserie de véhicule automobile (1).
